# EUROPEAN PATENT SPECIFICATION

(11) **EP 4 279 298 B1**
(45) Date of publication and mention of the grant of the patent: **02.07.2025**
(21) Application number: 23173483.1
(22) Date of filing: 15.05.2023
(51) Int. Cl.: B60C 25/05, B60C 25/138

(54) **METHOD FOR VERIFYING THE EXECUTION OF A PROCEDURE OF MOUNTING/DEMOUNTING TIRES ON/FROM RESPECTIVE RIMS OF VEHICLE WHEELS USING A VEHICLE WHEEL MAINTENANCE APPARATUS, AND APPARATUS THEREFOR**
VERFAHREN UND VORRICHTUNG ZUM PRÜFEN DER MONTAGE/DEMONTAGE-PROZEDUR VON REIFEN AUF/VON DEN FELGEN VON FAHRZEUGRÄDERN
PROCÉDÉ POUR VÉRIFIER L'EXÉCUTION D'UNE PROCÉDURE DE MONTAGE/DÉMONTAGE DE PNEUS SUR/À PARTIR DE JANTES RESPECTIVES DE ROUES DE VÉHICULE

(30) Priority: 16.05.2022 IT 202200010022
(43) Date of publication of application: 22.11.2023
(73) Proprietor: Snap-on Equipment Srl a unico socio, 42015 Correggio (RE) (IT)
(72) Inventor: SOTGIU, Paolo, 41125 Modena (IT); TRALLI, Marco, 41126 Modena (IT); RICCHETTI, Andrea, 42011 Bagnolo in Piano (RE) (IT)
(74) Representative: Eisenführ Speiser

(56) References cited:
- DE-A1- 102020 134 524
- US-B1- 8 613 303
- US-B1- 8 770 254
- US-B2- 7 404 427

## Description

In the name of: Snap-on Equipment S.r.l., an Italian company with registered office in Correggio (RE).

### Field of the invention

The present invention relates to a method for verifying the correct execution of a procedure of mounting/demounting tires on/from respective rims of vehicle wheels using a vehicle wheel maintenance apparatus, and a corresponding vehicle wheel maintenance apparatus, particularly an apparatus for mounting a tire on a wheel rim and/or for removing a tire from a vehicle wheel rim, such an apparatus being generally known as a tire changer.

### Prior art

A vehicle wheel is usually composed of a rim and a tire mounted on it.

Typically, the rim also comprises an inflation valve for inflating and/or deflating the tire. A sensor device for monitoring the air pressure in the tire (TPMS, or Tire Pressure Monitoring System) is commonly also present at the position of the valve. For example, there are known TPMS sensors made of aluminium (called "clamp-in") or rubber (called "snap-in"): in both cases, these are TPMS sensors associated with the inflation valve.

The TPMS sensor, which as stated is commonly mounted on the rim at the position of the inflation valve, may however be mounted in different positions.

For example, there are known TPMS sensors of the "strap" type (also called the "band" type): in these cases, the sensor is fixed to a metal strip wrapped around the rim, and is usually positioned opposite the stem of the inflation valve.

There are also known TPMS sensors mounted on the inner part of the tire, instead of on the rim, at the position of the tread.

In any case, during the processes of mounting and/or demounting a tire from the respective rim, using a tire changer for example, it is imperative that the mounting/demounting tools, such as claws, hooks, levers, discs, rollers and the like, are prevented from coming into contact with the inflation valve and/or the TPMS sensor, to avoid any possible damage to the valve, or to the TPMS sensor device where present, or to the mounting/demounting tool itself. It is also important to ensure that, during said mounting and demounting operations, the tire bead, particularly the portions of it that are most subject to tension, do not come into contact with the TPMS sensor, which could otherwise be damaged.

The forces generated in the mounting and/or demounting processes are also potentially harmful to the integrity of the tire itself, which is evidently subjected to stresses due both to the contact with the mounting/demounting tools and the contact with the rim.

Usually, the process of checking to ensure that such undesirable contact between the tools (and/or the bead) and the valve (and/or the TPMS sensor) does not occur is entrusted to the skill of the operator, who, when the wheel has been placed on a rotary support of the tire changer, and before the mounting or demounting operations are started, ascertains the correctness of the positioning of the TPMS sensor relative to the tools, and moves the tire manually, by causing the rotary support to rotate for example, so as to arrange it in place, with the aim of positioning the TPMS sensor correctly relative to the mounting/demounting tools.

The position of the TPMS sensor is checked visually by the operator. The checking is immediate in the case of operations for mounting the tire on the rim. However, in the case of operations for demounting the tire from the rim, the TPMS sensor is not directly visible. The position of the sensor is then deduced from the position of the inflation valve, if the TPMS sensor is associated with the valve. In case of doubt, for example where it is suspected that the TPMS sensor is not associated with the valve (in the case of TPMS "strap" sensors, or those mounted inside the tire), the operator either assumes that the sensor is mounted at 180° to the position of the inflation valve (which occurs very frequently, at least in the case of TPMS "strap" sensors), or cautiously performs the operation of loosening the beads of the tire to enable the tire beads to be detached from the rim, while visually checking the position of the TPMS sensor, before starting the demounting procedure itself.

However, these operations are often difficult to carry out, particularly if the wheel is heavy or large, or if it is placed on the rotary support with the aid of lifting devices connected to the tire changer.

After the initial positioning the operator must execute the process of demounting the tire from the rim or mounting the tire on the rim, taking care to ensure that the tire bead does not come into contact with the TPMS sensor, where present. In this case also, the correct initial positioning of the wheel and tire, or of the rim only, is of primary importance for the satisfactory outcome of the mounting or demounting process.

As mentioned, during the operations of demounting the tire from the rim or mounting the tire on the rim, it is also important to ensure that the tire and/or its parts, such as the sidewall or bead, are not subjected, because of contact with the mounting/demounting tools and/or because of contact with the rim, to excessive stresses that may damage them. In this case also, reliance is mainly placed on the operator's skill.

Usually, the correct procedures to be followed by the operator during the mounting or demounting operations, and the correct relative positioning of the tools and valve and/or TPMS sensor, are, for example, described in the guidelines set out by the German organization wdk (Wirtschaftsverband der deutschen Kautschukindustrie e. V.) or similar standardization bodies.

In any case, the correct relative positioning of tools, valves and/or TPMS sensors, throughout the mounting/demounting process, is made entirely dependent on the experience and skill of the operator, and this may give rise to errors as well as causing a loss of time.

As a general rule, the considerations described above with particular reference to the valve and/or to the TPMS sensor are also applicable to the tire and/or to the rim as a whole. In other words, it is important to verify, in the course of the mounting and/or demounting operations, that all the component parts of the tire and the rim, not only the valve and/or the TPMS sensor, suffer any damage.

There are some known solutions for facilitating the operator's task. For example, US patent document 7,404,427 B2 describes a tire changer having a radiofrequency sensor for the purpose of identifying the presence of a TPMS device and, if necessary, checking the mounting/demounting tools appropriately in order not to damage the TPMS device.

However, such solutions have a number of drawbacks.

In the first place, where the checking is wholly entrusted to the skill of the operator, it is unfortunately still possible for human error to occur, as stated above.

Furthermore, the manual adjustment of the position of the wheel before the start of the mounting or demounting operations inevitably entails an undesired increase in the time taken for the mounting or demounting operations.

On the other hand, when systems for identifying the TPMS device are present, they require the use of radiofrequency sensors which are usually costly and difficult to use, since the frequencies used by the various manufacturers of TPMS devices are not standardized, and therefore require particular care in the production of the components and their continual updating in line with the development of the TPMS devices and other factors.

Another example of a known solution is provided by US 8,770,254 B1, in which a tire changer has a rotational position sensor for supplying a signal indicative of a rotational position of the wheel, and a tool having a force sensor. The signals from the force sensor associated with the tool are used by a control unit to identify a component of the wheel, for example an inflation valve or a TPMS sensor, where it is desirable not to cause such a component to come into contact with the tire changer components such as the tools, or portions of the tire such as the bead.

Patent EP 3 415 348 A1 of the present applicant illustrates a further solution for facilitating the operator's task. This patent illustrates a tire changer having sensors for continuously checking, during the mounting/demounting operations, at least one operating parameter of the electric motor of the tire changer, in order to monitor both its present value and any temporal variation or gradient, and to compare such present values and/or gradients with corresponding specified threshold values, for the purpose of automatically controlling the tire changer so that such present values and/or gradients are kept with accepted ranges.

An example of a solution designed to facilitate the observation of the procedure of mounting a tire on a rim and/or of demounting the tire from the rim, in order to determine the correctness of the execution, is illustrated by patent EP 2 514 612 A1 of the present applicant, which illustrates a tire changer having means for measuring and recording temperature values of the tire and/or for measuring and recording the values of forces acting on the tire, during the mounting/demounting operations. The measured values of temperature and/or force may be stored, displayed or printed.

A further example of a solution for facilitating the operator's task is illustrated in Italian patent application no. 102020000003560 of the present applicant. This solution illustrates a method for positioning the wheel of a vehicle on a tire changer, providing the use of an input/output device by means of which the operator can indicate the position of the valve and/or of the TPMS sensor to the control unit with which the tire changer is provided. On the basis of this information, and before starting the wheel maintenance operations, the tire changer automatically places said wheel in a predetermined position relative to the mounting/demounting tools such that the wheel is placed at a safe distance from said tools, in order to prevent any contact between the mounting/demounting tools and the inflation valve and/or the TPMS sensor, and in order to enable the wheel maintenance operation to be carried out in such a way as to minimize the risk of any contact between the tire bead and the TPMS sensor, where the latter is present.

The method described in the aforesaid Italian patent application no. 102020000003560 may be improved further. Indeed, if correctly applied, this method generally enables the wheel maintenance operation to be executed in conformity with wdk procedures, thereby avoiding damage to the rim, the tire, the valve, the TPMS sensor and/or the tools of the tire changer.

Sometimes, however, especially in the case of particularly problematic tires, for example tires with very stiff shoulders, the tire may slide on the rim during the mounting or demounting operations, so that, in spite of correct initial positioning of the valve and/or of the TPMS sensor, these components may come to be located, in the course of the aforesaid maintenance operations, in positions that are dangerously close to those of the tools and/or in areas in which the rim exerts a high level of tensile force or stress on the tire bead.

Furthermore, since work is often done at a rather frantic rate in service stations, especially at times of year when the customary changeover of summer and winter tires takes place, the operator may start the mounting/demounting procedure on a wheel that has been damaged previously, without first verifying the absence of damage and/or the correct operation of the TPMS sensor. In these cases, even if the operator executes the mounting/demounting procedure to a professional standard, disputes will inevitably arise between the service station and customers.

Such disputes are usually hard to resolve, since it is difficult to prove who has actually damaged the wheel, and they often have the undesired effect of causing losses of time and possibly money and/or customers for the service station.

In an attempt to resolve said problems, Italian patent application no. 102021000015164 of the present applicant proposes a method for verifying that, throughout the wheel maintenance operations, particularly the operations of mounting the tire on the respective rim or demounting the tire from the respective rim, the TPMS sensor is always located at a safe distance from the mounting/demounting tools and/or from the tire bead. Specifically, the method illustrated in Italian patent application no. 102021000015164 has the aim of ascertaining and appropriately documenting the fact that, throughout the execution of the wheel maintenance operations, the relative distance between the TPMS sensor and the mounting/demounting tools and/or the portions of the rim subject to most stress from any contact with the bead of the tire always remains substantially such as to ensure the correct execution of the procedure and thus avoid possible damage.

However, the method described in Italian patent application no. 102021000015164 may be improved further.

This is because this method focuses on ascertaining that the valve and/or the TPMS sensor are not damaged during the mounting/demounting operations, whereas it would be desirable for a similar ascertainment, that is to say an ascertainment of absence of damage, to be extended to other components of the wheel, particularly the rim and/or the tire in their entirety.

In this context, it should also be noted that the method illustrated in Italian patent application no. 102021000015164 has nothing to say regarding another significant aspect, that is to say the ascertainment of the state of wear of, and/or any damage to, the tire and/or the rim and/or the valve and/or the TPMS sensor before these are subjected to the mounting/demounting operations; consequently there may be an incomplete documentation of their state, which would be of no assistance in fully clarifying the questions that may give rise to disputes between a service station and its customers.

Furthermore, owing to the lack of documentation of the state of wear of, and/or any damage to, the tire and/or the rim and/or the valve and/or the TPMS sensor before these are subjected to the mounting/demounting operations, the management of the wheel is far from optimal, for example in terms of the warehouse logistics and any disposal and corresponding tracing of the tires and/or rims that are worn or damaged in any way and no longer usable.

### Object of the invention

In this context, the applicant's aim is to propose a simple and reliable method for verifying the execution of a procedure of mounting/demounting tires on/from respective rims of vehicle wheels using a vehicle wheel maintenance apparatus. The method of the present invention is designed to verify that, throughout the performance of the wheel maintenance operations, particularly the operations of mounting the tire on the respective rim or demounting the tire from the respective rim, the TPMS sensor is always located at a safe distance from the mounting/demounting tools. The method proposed by the present invention is also designed to verify that, throughout the performance of the wheel maintenance operation, the risk that the tire bead will come into contact with the TPMS sensor, where present, is minimized.

Additionally, the method of the present invention has the aim of verifying that the tire or its specific parts, for example the sidewall and/or the beads, is not subjected to any stress by the rim and/or the mounting/demounting tools that is liable to cause damage and/or harm its integrity.

Specifically, the method of the present invention has the aim of ascertaining and appropriately documenting the fact that, throughout the performance of the wheel maintenance operations, the relative distance between the TPMS sensor and the mounting/demounting tools and/or the most highly stressed portions of the tire always remains substantially such as to ensure the correct execution of the procedure and thus avoid possible damage, while also ensuring that the tire, or its parts, are not subjected to excessive stress by the rim and/or the tools.

Another object of the present invention is that of making the results of such verification and/or ascertainment available for the benefit of operators, service stations and customers. It is also an object of the present invention to provide a vehicle wheel maintenance apparatus which implements said method.

In particular, an object of the present invention is to provide a method, and a corresponding apparatus, for verifying the correct positioning of the wheel of a vehicle on a wheel maintenance apparatus, in such a way as to ensure that, during the performance of the maintenance procedure, the TPMS sensor, where present, is sufficiently distant from the areas of the rim where the TPMS sensor is mounted, and on which any contact with the tire bead may create high stresses.

Another object of the present invention is to provide a method, and a corresponding apparatus, for appropriately verifying and then documenting the correct positioning of a vehicle wheel on a wheel maintenance apparatus, as well as the level of stress to which the tire is subjected by the rim and/or tools, both at the start of the maintenance procedure and during the performance thereof, in such a way as to avoid as far as possible, or at least to resolve speedily, any dispute between a service station (or operator) and a customer concerning the responsibility for any damage. Another object of the present invention is to provide a method, and a corresponding apparatus, for appropriately documenting the correct positioning of a vehicle wheel on a vehicle maintenance apparatus, as well as the level of stress to which the tire is subjected by the rim and/or tools, during the performance of the mainteanance procedure, which will certify that the maintenance procedure has taken place to a professional standard, for example in accordance with wdk procedures.

Another object of the present invention is to provide a method, and a corresponding apparatus, for verifying and if necessary documenting the correct positioning of a vehicle wheel on a wheel maintenance apparatus, as well as the level of stress to which the tire is subjected by the rim and/or tools, which method is reliable, simple and economical to implement, is easily usable and understandable by any operator, service station or customer, and needs no particular detailed explanations of its significance or frequent updates.

Another object of the present invention is to provide a computer program which implements a method for verifying and if necessary documenting the correct positioning of a vehicle wheel on a wheel maintenance apparatus, as well as the level of stress to which the tire is subjected by the rim and/or tools, as described above.

Finally, a further object of the present invention is to provide a method, and a corresponding apparatus, for verifying and if necessary documenting the correct positioning of a vehicle wheel on a wheel maintenance apparatus, as well as the level of stress to which the tire is subjected by the rim and/or tools, which method includes optimized management of the wheel, for example in terms of warehouse logistics and any necessary disposal and corresponding tracing of tires and/or rims that are worn or damaged in any way and no longer usable.

### Summary of the invention

The applicant has discovered that these and further objects are achieved by a method for verifying the execution of a procedure of mounting/demounting a tire on/from a rim of a vehicle wheel, in the context of a process of wheel maintenance, comprising the step of mounting a wheel on a rotary support of a vehicle wheel maintenance apparatus, said wheel comprising a respective rim and said apparatus comprising an electric motor for putting the rotary support into rotation and at least one tool for demounting a tire from the rim or for mounting the tire on the rim.

The method of the present invention further comprises the steps of identifying a position of at least one reference point on the rim and putting the rotary support into rotation to position the wheel in a position in which the at least one reference point on the rim is located at a predetermined distance from the at least one demounting or mounting tool.

According to one aspect, the at least one reference point on the rim is located on the rim itself, and preferably comprises an inflation valve or a TPMS sensor or a spoke.

The method of the present invention then provides for the steps of executing the procedure of demounting the tire from the rim or mounting the tire on the rim, and determining at least one position, and at least one respective value, of stress applied by the rim and/or by the demounting or mounting tool to the tire, as well as calculating an angular distance between the position of the at least one reference point on the rim and the at least one position of stress applied by the rim and/or by the demounting or mounting tool to the tire.

According to a possible variant, the method of the present invention provides for determining a plurality of positions, and a plurality of respective values, of stress applied by the rim and/or by the demounting or mounting tool to the tire.

The method of the present invention is characterized in that it comprises the steps of verifying that the angular distance between the position of the at least one reference point on the rim and the at least one position of stress applied by the rim and/or by the demounting or mounting tool to the tire lies within a predetermined range of acceptable distances, said range of acceptable distances being stored in memory means accessible by a control unit associated with the vehicle wheel maintenance apparatus, and of verifying that the at least one respective value of stress applied by the rim and/or by the demounting or mounting tool to the tire lies within a predetermined range of acceptable stress values, said range of acceptable stress values being stored in said memory means accessible by a control unit associated with the vehicle wheel maintenance apparatus. The method of the present invention is also characterized in that it comprises the step of making the results of the preceding verification steps available.

According to a preferred embodiment, the step of making the results of the preceding verification steps available comprises the steps of storing the at least one position of stress applied by the rim and/or by the demounting or mounting tool to the tire in said memory means, and of storing the at least one respective value of stress applied by the rim and/or by the demounting or mounting tool to the tire in said memory means. This preferred embodiment, further comprises the step of creating, in said memory means, a report document comprising data relating to the at least one position, and to the at least one respective value, of stress applied by the rim and/or by the demounting or mounting tool to the tire, and the step of sharing said report document.

According to one aspect, this report document also comprises further data relating to the mounting and/or demounting process, in addition to the data relating to the at least one position, and to the at least one respective value, of stress applied by the rim and/or by the demounting or mounting tool to the tire.

According to one aspect, this report document comprises data identifying the wheel and/or the rim and/or the tire and/or the TPMS sensor and/or any other component or accessory of the wheel.

According to another aspect, this report document also comprises data relating to the identification of the vehicle on which the wheels subjected to the maintenance process were, or are to be, mounted.

According to a further aspect, this report document also comprises data relating to the state of wear and/or any damage of the tires and/or rims and/or valves and/or TPMS sensors of the wheels subjected to the maintenance process.

According to a preferred embodiment, the step of making the results of the preceding verification steps available comprises the step of printing the results by means of a printer; for example, it comprises the step of printing the report document.

According to a further preferred embodiment, in addition or as an alternative to the preceding one, the step of making the results of the preceding verification steps available comprises the step of displaying the results on a screen; for example, it comprises the step of displaying the report document on a screen.

According to one aspect, the method of the present invention comprises the step of sending the results of the preceding verification steps to a remote computer system, of the cloud type for example.

According to one aspect, the method of the present invention comprises the step of sending the report document to a remote computer system.

According to one aspect, the method of the present invention comprises the step of creating, on said remote computer system, a data bank comprising a plurality of report documents.

According to a preferred embodiment, the step of determining at least one position, and at least one respective value, of stress applied by the rim and/or by the demounting or mounting tool to the tire comprises the step of correlating a measurement of the rotational position of the electric motor and/or of the rotary support and/or of the wheel with a measurement of the resistive torque applied to the electric motor and/or with a measurement of the current draw of the electric motor and/or with a measurement of the rotation speed and/or acceleration of the electric motor and/or of the rotary support and/or of the wheel.

According to a variant of this preferred embodiment, the method of the present invention further comprises the steps of determining at least one value of diameter of the wheel and calculating at least one value of force applied by the rim and/or by the demounting or mounting tool to the tire, on the basis of the at least one value of stress applied by the rim and/or by the demounting or mounting tool to the tire, and of the at least one value of diameter of the wheel, lies within a predetermined range of acceptable force values, said range of acceptable force values being stored in said memory means accessible by the control unit associated with the vehicle wheel maintenance apparatus.

According to one aspect of the present invention, the step of identifying the position of the at least one reference point on the rim comprises the steps of graphically displaying the wheel on an input/output device interfaceable with the wheel maintenance apparatus, with the wheel divided into a plurality of parts, and using the input/output device to associate the position of the at least one reference point on the rim with a part chosen from among the plurality of parts into which the wheel is graphically divided, together with the step of calculating said predetermined distance of the at least one reference point on the rim from the at least one demounting or mounting tool, as the distance of the at least one tool from a point belonging to the part associated with the position of the at least one reference point on the rim.

According to one aspect of the present invention, the step of executing the procedure of demounting the tire from the rim or mounting the tire on the rim is controlled automatically by the control unit associated with the vehicle wheel maintenance apparatus, so as to keep the angular distance between the position of the at least one reference point on the rim and the at least one position, and the at least one respective value of stress applied by the rim and/or by the demounting or mounting tool to the tire, within respective predetermined ranges of acceptable distances and acceptable values of stress.

The present invention also relates to a vehicle wheel maintenance apparatus, comprising a base and a rotary support mounted on the base and capable of receiving and supporting a rim of a vehicle, said rim having at least one reference point.

According to one aspect, the at least one reference point on the rim is located on the rim itself, and preferably comprises an inflation valve or a TPMS sensor or a spoke, or any other element capable of identifying a position, for example a sign, an adhesive, etc.

Said vehicle wheel maintenance apparatus further comprises an electric motor, associated with the base, for putting the rotary support into rotation and at least one tool for demounting a tire from the rim or for mounting the tire on the rim.

The vehicle wheel maintenance apparatus according to the present invention further comprises a control unit capable of actuating the electric motor for positioning the wheel in a position in which the at least one reference point on the rim is located at a predetermined distance from the at least one demounting or mounting tool, said control unit having access to memory means.

Said apparatus further comprises a rotation sensor, operationally connected to the control unit, for measuring the position and/or the rotation speed and/or the acceleration of the electric motor and/or of the rotary support and/or of the wheel, together with detector means, operationally connected to the control unit, for measuring a resistive torque applied to the electric motor and/or a current draw of the electric motor.

According to the present invention, the control unit of the vehicle wheel maintenance apparatus is capable of identifying at least one position, and at least one respective value, of stress applied by the rim and/or by the demounting or mounting tool to the tire, and of calculating an angular distance between the position of the at least one reference point on the rim and the at least one position of stress applied by the rim and/or by the demounting or mounting tool to the tire.

The present invention is characterized in that the control unit of the vehicle wheel maintenance apparatus is capable of verifying that the angular distance between the position of the at least one reference point on the rim and the at least one position of stress applied by the rim and/or by the demounting or mounting tool to the tire lies within a predetermined range of acceptable distances stored in said memory means, and that the at least one respective value of stress applied by the rim and/or by the demounting or mounting tool to the tire lies within a predetermined range of acceptable stress values stored in said memory, and in that the control unit is capable of making the results of said verifications available.

According to a possible variant, the control unit of the vehicle wheel maintenance apparatus of the present invention is capable of determining a plurality of positions, and a plurality of respective values, of stress applied by the rim and/or by the demounting or mounting tool to the tire.

According to a preferred embodiment, the control unit of the vehicle wheel maintenance apparatus is capable of storing, in said memory means, the at least one position and the at least one respective value of stress applied by the rim and/or by the demounting or mounting tool to the tire. The control unit is also capable of creating, in said memory means, a report document comprising at least data relating to the at least one position and to the at least one respective value of stress applied by the rim and/or by the demounting or mounting tool to the tire, and of sharing said report document.

According to one aspect, the report document also comprises further data relating to the mounting and/or demounting process, in addition to the data relating to the at least one position and to the at least one respective value of stress applied by the rim and/or by the demounting or mounting tool to the tire.

According to one aspect, this report document comprises data identifying the wheel and/or the rim and/or the tire and/or the TPMS sensor and/or any other component or accessory of the wheel.

According to another aspect, this report document also comprises data relating to the identification of the vehicle on which the wheels subjected to the maintenance process were, or are to be, mounted.

According to a further aspect, this report document also comprises data relating to the state of wear and/or any damage of the tires and/or rims and/or valves and/or TPMS sensors of the wheels subjected to the maintenance process.

According to another aspect, this report document further comprises data relating to the location of the wheel and/or of its separate components (rim, tire, etc.) in the service station warehouse or in a remote warehouse, and/or data relating to the disposal of the tire where necessary. In general, the report document may comprise data relating to the management of the logistics of the wheel warehouse.

According to a variant embodiment, the control unit is operationally connected to a printer in order to print the results of said verifications, for example in order to print the report document.

According to a further variant embodiment, as an alternative or in addition to the printer, the control unit is operationally connected to a screen in order to display the results of said verifications, for example in order to display the report document.

According to a variant embodiment, the memory means accessible by the control unit are at least partially located in the vehicle wheel maintenance apparatus.

According to a further variant embodiment, as an alternative or in addition to their at least partial location in the wheel maintenance apparatus, the memory means accessible by the control unit are at least partially located in a remote computer system, of the cloud type for example.

According to another variant embodiment, as an alternative or in addition to the preceding variants described above, the memory means accessible by the control unit are at least partially located in a portable device, for example a tablet or a smartphone.

According to a preferred embodiment, the control unit is capable of controlling the vehicle wheel maintenance apparatus automatically, so as to keep the angular distance between the position of the at least one reference point on the rim and the at least one position, and the at least one respective value, of stress applied by the rim and/or by the demounting or mounting tool to the tire within respective predetermined ranges of acceptable distances and acceptable values of stress stored in said memory means.

According to a further preferred embodiment, the vehicle wheel maintenance apparatus of the present invention comprises an input/output device capable of graphically displaying the wheel divided into a plurality of parts, the input/output device being operable by an operator for the purpose of selecting a part, from among the plurality of parts into which the wheel is divided, associated with the position of the at least one reference point on the rim. According to this embodiment, the control unit is capable of calculating the predetermined distance of the at least one reference point on the rim from the at least one demounting or mounting tool, as the distance of the at least one demounting or mounting tool from a point belonging to the part associated with the position of the at least one reference point on the rim.

In the following text, a description will be given, by way of an example and therefore in a non-limiting manner, of some preferred embodiments of the present invention.

### Brief description of the drawings

This description is set out below with reference to the appended drawings, which are provided for guidance only and which are therefore non-limiting, in which:
- Figure 1 shows, in an axonometric view, an example of a tire changer according to the invention;
- Figure 1a shows, in an axonometric view, an example of a vehicle wheel, that is to say an assembly consisting of a rim and tire mounted thereon;
- Figure 2 illustrates, by way of example, a portion of a vehicle wheel rim, having an inflation valve and TPMS sensor associated therewith, of the type usually subjected to the processes of maintenance using apparatuses according to the present invention;
- Figure 2a shows, by way of example, a vehicle wheel rim having a TPMS sensor of the "strip" type mounted on the opposite side to the inflation valve, of the type usually subjected to the processes of maintenance using apparatuses according to the present invention;
- Figure 3 reproduces a graph, known from the document "wdk guideline for examination of tire technology - Test guideline for tire changers", which shows the variation over time of the forces (expressed in kN) exerted on the rim by the tire bead in the course of the process of mounting the tire on a respective rim (duration expressed in seconds);
- Figure 4 reproduces a graph, known from the document "wdk guideline for examination of tire technology - Test guideline for tire changers", which shows the variation over time of the forces (expressed in kN) exerted on the rim by the tire bead in the course of the process of demounting the tire from a respective rim (duration expressed in seconds);
- Figure 5 reproduces a possible example of a report document including data relating to the procedure for mounting and demounting tires on/from respective rims, together with identification data of the wheels and of the vehicle to which the wheels relate. Such a report document makes it easy to verify whether the mounting/demounting procedure has been executed to a professional standard without damaging any component of the wheel;
- Figure 6 shows schematically, during the operations of demounting the tire from the wheel, shown here in plan view, the recommended areas in which it is desirable to position the TPMS sensor relative to the mounting/demounting tools, at the start of the demounting process; an approximate indication is also given of the areas in which, during said demounting process, the stresses applied to the tire bead by the rim usually develop;
- Figure 6a shows schematically, at the conclusion of the operations of demounting the tire from the wheel, shown here in plan view, the approximate position in which it is desirable for the TPMS sensor to be located relative to the mounting/demounting tools;
- Figure 7 shows schematically, during the operations of mounting the tire on the wheel, shown here in plan view, the recommended areas in which it is desirable to position the TPMS sensor relative to the mounting/demounting tools at the start of the mounting process; an approximate indication is also given of the areas in which, during said mounting process, the stresses applied to the tire bead by the rim usually develop;
- Figure 7a shows schematically, at the conclusion of the operations of mounting the tire on the wheel, shown here in plan view, the approximate position in which it is desirable for the TPMS sensor to be located relative to the mounting/demounting tools.

### Detailed description of preferred embodiments of the invention

In the following description, any expressions used, such as "right", "left", "above", "below", "upper", "lower", "horizontal", "vertical" and the like, are provided purely for illustrative purposes and refer to the particular arrangement of elements present in the attached figures, and are therefore non-limiting in nature.

With reference to the attached figures, the number 1 indicates the whole of a vehicle wheel maintenance apparatus, particularly a tire changer.

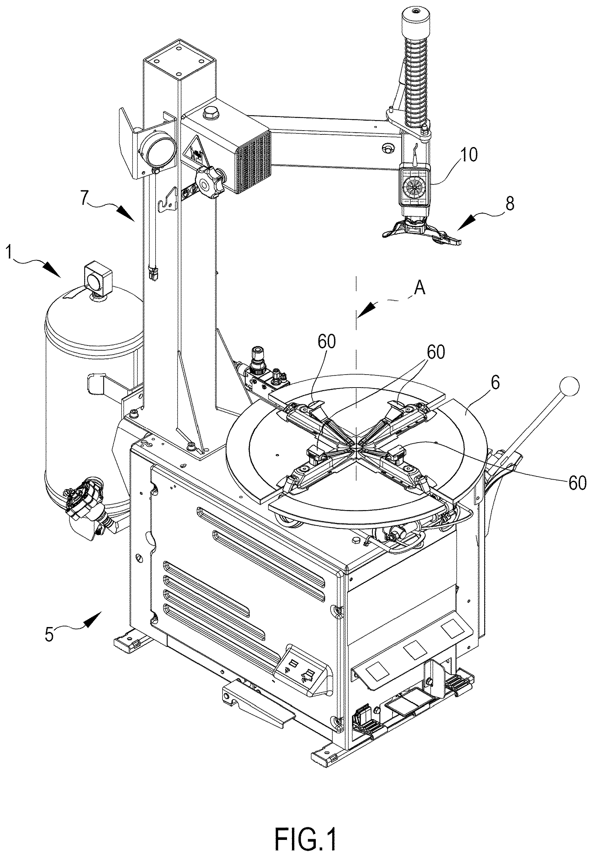

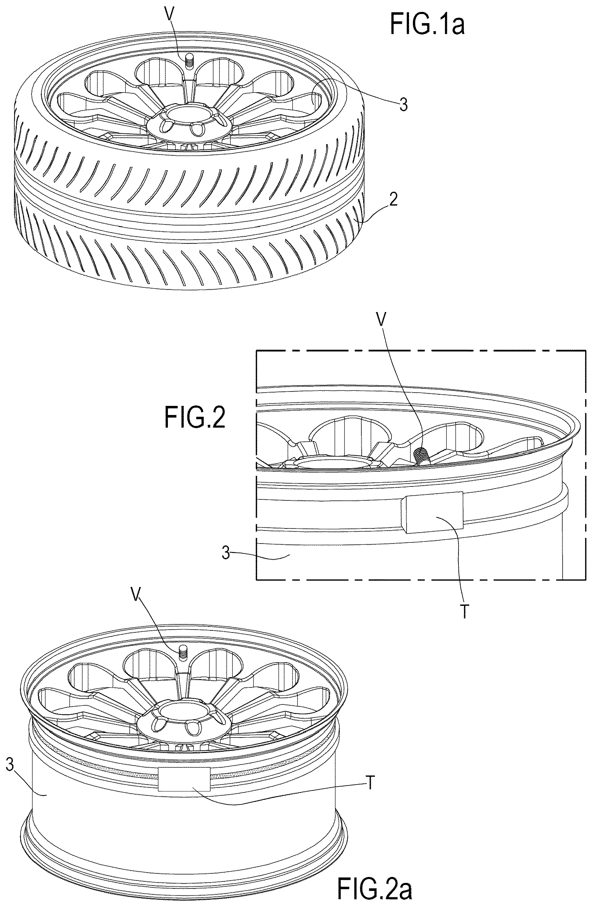

The apparatus 1 illustrated in Figure 1 is a tire changer, that is to say a device for mounting tires 2 on a rim 3 of a wheel 4 and/or for demounting tires 2 from a rim 3. A tire usually comprises a tread and two sidewalls which terminate in respective beads, which are the elements for coupling the tire to the rim. An example of a wheel 4, that is to say an assembly consisting of a rim 3 and a tire 2, is illustrated in 1a. Figure 1a also shows how, when the tire 2 is mounted on the rim 3, the operator is usually still able to observe the position of the inflation valve V, but not that of the TPMS sensor.

The apparatus 1 comprises a base 5 to be placed on the ground. On the base 5 there is mounted a rotatable support 6 formed by a vertical shaft at the upper end of which are arranged support means, of the central locking type for example (known in the technical jargon as a back-up plate or centre post) or of the self-centring plate type, all of which are known systems, comprising, for example, as illustrated in Figure 1, a self-centring plate 6 for receiving and supporting the rim 3 of the wheel 4, and locking means, for example gripping clamps 60, for fixing the rim 3 integrally to the self-centring plate.

The rim 3 of the wheel 4 has an inflation valve V of a known type for inflating and/or deflating the tire 2. On the rim 3, usually at the position of the valve V, there may also be a device (TPMS, or Tire Pressure Monitoring System) for monitoring the pressure of the tire, also of a known type, and illustrated schematically in Figure 2 where it is indicated by the letter T. On the other hand, Figure 2a illustrates a rim 3 having a TPMS sensor of the "strap" or "band" type, that is to say a sensor fixed to a metal strip wrapped around the rim, the sensor being positioned at 180° to the position of the inflation valve V.

The self-centring plate 6 is rotatable on the base 5 about its main axis A and is connected to an electric motor, which for example may be positioned inside a casing of the base 5 and not illustrated. The motor is configured to make the self-centring plate 6 and the wheel 4 rotate together about the main axis A of the self-centring plate shaft 6 (which coincides with the main axis, or axis of rotation, of the wheel 4). The base 5 comprises a column 7 extending vertically. The column 7 is substantially parallel to the shaft of the self-centring plate 6 and carries at least one mounting and/or demounting tool 8, of a known type and not described in detail, capable of mounting and/or demounting a tire 2 on/from the rim 3. The mounting/demounting tool 8 is configured to come into contact with the sidewalls of the tire 2 from above and/or from below in the proximity of the beads of the tire 2, which, when said tire 2 is mounted on the rim 3, lie behind two retaining flanges of the rim 3.

The apparatus 1 comprises a control unit 9 (not illustrated in the figure) for actuating the electric motor. The control unit 9 is configured to send control signals to the electric motor, and this operation is directed by an operator via a user interface (which may, for example, comprise push buttons, pedals, a touch screen, etc.) connected to the control unit.

At least one actuator, of a known type and not described in detail, is operationally connected to the mounting/demounting tool 8 and is connected to the control unit 9 of the apparatus 1. The control unit 9 is configured to send control signals to the actuator so as to control the mounting/demounting tool 8 for the purpose of mounting or demounting a tire 2 on/from the rim 3. This operation is also directed by an operator via a user interface (comprising, for example, push buttons, pedals, a touch screen, etc.) connected to the control unit. Alternatively, for tire changers of the traditional, or lever, type, the operator performs the mounting/demounting operation manually.

The control unit 9 is usually capable of knowing the position of the mounting/demounting tool 8 relative to at least one or more reference points, for example relative to the column 7, the base 5, the self-centring plate 6, the wheel 4, or other. Preferably, the control unit 9 is usually capable of knowing the position of the mounting/demounting tool 8 relative to at least the self-centring plate 6.

Typically, the apparatus 1 has a rotation sensor 11 (known and not illustrated in the figures), which for example comprises an encoder, preferably of the optical or capacitive type, associated with the shaft of the self-centring plate 6 and/or with the shaft of the electric motor connected to it, and is suitably interfaced with the control unit 9.

The rotation sensor, which for example comprises an encoder, preferably of the magnetic type in this case, could alternatively be mounted inside the electric motor.

In any case, as a result of an initial calibration procedure, the control unit 9 is capable of correlating the position of the tool 8 with the rotational position of the self-centring plate 6 and therefore of the wheel 4 fixed to it.

The apparatus 1 also comprises an input/output device 10, capable of graphically displaying the wheel to be worked on and operationally connected to the control unit 9.

This device may be part of the more general user interface by means of which the operator controls, via the control unit, the electric motor and/or the at least one actuator connected to the mounting and demounting tool.

Alternatively, said input/output device may be specifically dedicated to the display of the wheel, and may only optionally include supplementary functions for the convenience of the operator.

The input/output device 10 is mounted on any type of arm connected to the column 7, for supporting the mounting and demounting tool 8 in a convenient position for the operator.

The input/output device 10 comprises a screen, of the touch screen type, by means of which the wheel can be graphically displayed. As an alternative to the touch screen, a conventional screen may be used, connected if necessary to a manual input device (a thumb wheel, push buttons, or the like) for identifying the angular sector of the TPMS sensor, as explained below.

In any case, on the screen of the input/output device, the wheel 4 is graphically divided into a plurality of parts, shown as circular sectors.

The wheel is, for example, shown in a top view, and its upper circular sectors, that is to say those located near the upper part of the area of the screen dedicated to the display of the wheel, correspond, in physical reality, to the sectors of the wheel positioned near the vertical column 7 which is on the opposite side of the wheel to the operator.

In a possible variant, the upper sectors of the wheel, in the graphic display, correspond in physical reality to the sectors of the wheel positioned near the mounting/demounting tool.

In any case, the identification, even if approximate, of the circular sectors on the graphic display, relative to the corresponding sectors that theoretically refer to the physical wheel, is always easily and immediately understandable for the operator, independently of the type of graphic display used, which may even be purely approximate and/or abstract.

Thus, using the input/output device 10, the operator indicates the angular position of the TPMS sensor to the control unit 9.

By using the rotation sensor 11, it is then possible to know how the angular position of the TPMS sensor changes, relative to the position initially indicated by the operator, during the wheel maintenance procedure.

The rotation sensor 11, operating independently if provided with appropriate on-board electronics, or operating with the assistance of the control unit 9 of the tire changer 1 if necessary, can detect the rotational position and/or, if necessary, the speed and acceleration of the self-centring plate 6 and/or of the shaft of the electric motor and/or of the wheel fixed to the self-centring plate.

The apparatus 1 is also provided with suitable detector means 12, known and not illustrated, for detecting the current drawn by the electric motor. Said detector means 12 may, for example, be a Hall effect sensor, or a current measuring resistor, or a current transformer or the like. As an alternative or in addition to what is described above, the detector means could also comprise at least one torque measuring device, such as a torquemeter, accelerometer or other.

In any case, both the rotation sensor 11 or the detector means 12 are connected to the control unit 9, which uses the detections performed by such tools to identify at least one position of maximum tension applied by the rim 3 and/or by the at least one mounting/demounting tool 8 to the tire 2, for example to the sidewall and/or to the bead of the tire.

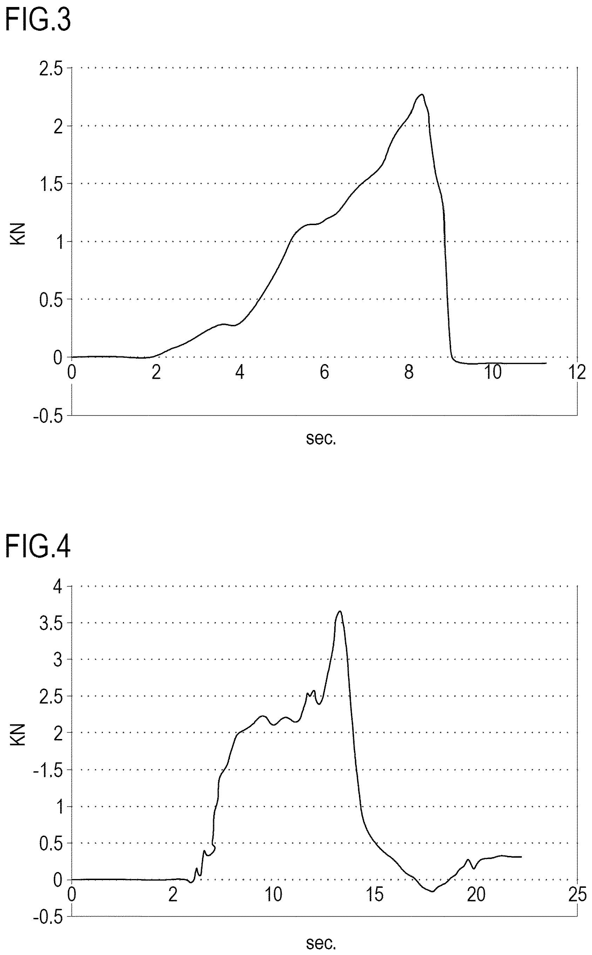

The variation of the tension imparted to the rim, being applied thereto by the tire bead during the procedure of mounting or demounting respectively, is known on the basis of these detections (see Figures 3 and 4 respectively), and as a result of the knowledge of the type of maintenance operation to be performed (mounting or demounting). Said tensions, measured by the German organization wdk by using an appropriate, suitably instrumented, rim, are also indicative of similar constraint reactions exerted by the rim, which is much more rigid than the tire, on the tire itself, and particularly on the sidewall and beads of the tire, which will thus be stressed by contact with the rim.

As shown in Figures 3 and 4, such tensions usually show different variations according to the type of maintenance operation, and may comprise one or more tension peaks, that is to say moments at which the tensile stress to which the rim (or the tire, depending on the point of view) reaches a maximum in specific steps of the procedure. These aspects, which are fully documented in the wdk procedures, are well known to those skilled in the art and will not be described in detail.

The current actually drawn by the electric motor, and detected by the detector means 12, can easily be correlated with the resistive torque applied to the electric motor, and therefore with the tensile stresses imparted to the tire bead by the rim; consequently, it is possible to know, because of the results of detection obtained from the rotation sensor 11, the angular positions of the wheel at which the tire is subjected to high-tension states, and which would therefore cause probable damage or might cause damage to the TPMS sensor when the latter comes into contact with the tire bead portion subjected to high-tension states.

If the procedure of mounting the tire on the rim and/or the procedure of demounting the tire from the rim is carried out to a professional standard, the TPMS sensor should never be positioned, at the start or end of the procedure or in the course thereof, within or near the areas affected by such high-tension states.

The control unit 9 of the tire changer 1 is capable of calculating the angular distance between the position of the TPMS sensor, considered as a reference point on the rim for example (and/or of the inflation valve V if the TPMS sensor is associated with the valve or is placed at a known distance from the valve, for example at 180° from it), and the positions of high stress of the tire bead.

Such positions of high stress comprise both the positions at which the tension reaches a maximum, that is to say the positions of peak tension, and the positions adjacent to such peak positions.

In general, therefore, it is possible to define larger or smaller ranges of rotation in which the TPMS sensor should never be located, and it is clearly possible to draw up a hierarchy of risk corresponding to respective threshold values of stress in order to define the more or less risky angular ranges, in terms of mechanical stresses and respective rotational positions, in which the valve and/or the TPMS sensor should or should not be located at the end or the beginning of the procedure or in the course thereof.

The control unit 9 is usually also capable of mapping the variation in stresses to which the tire is subjected by the rim and/or by at least one mounting/demounting tool along the whole circumference of the wheel. Thus it is possible to ensure that the tire is not subjected to stresses that might damage it.

The control unit 9 can access memory means 13 (known and not illustrated in the figures) comprising information about the ranges of distances considered acceptable between the valve and/or the TPMS sensor and the portions of tire stressed by contact with the rim and/or tools, and about the ranges of respective values of stress that are also considered acceptable both as regards the integrity of the TPMS sensor and/or valve and that of the tire.

Such ranges of acceptable values may be established in advance by the manufacturer of the tire changer (and possibly updated periodically), or may be determined by the operator, on the basis of the type of wheel to be worked on, for example.

The memory means 13 may reside directly in the tire changer 1, or may be partially or completely located in an external computer system; for example, it may reside in a server in the workshop where said tire changer is located, or in a portable device available to the operator, or may be located elsewhere, for example in a remote computer system of the cloud type.

The control unit 9 is governed by a computer program containing instructions for controlling the tire changer, according to the present invention. Said computer program resides in further memory means 14 that may be the same as the aforesaid memory means 13 accessible by the control unit 9, or may be different from these.

Said computer program may also be periodically updated; for example, the memory means 14 may be set up to receive periodic updates carried out, or at least approved, by the manufacturer of the tire changer, either by the intervention of an authorized technician or by means of automatic updating procedures executed by remote control, if this is considered appropriate and if the tire changer is connected to a network.

In the course of the mounting and/or demounting process, the control unit 9 therefore verifies that the calculated angular distances between the valve and/or the TPMS sensor and the stressed portions of the tire, as well as said stress values, lie within said ranges defined as acceptable.

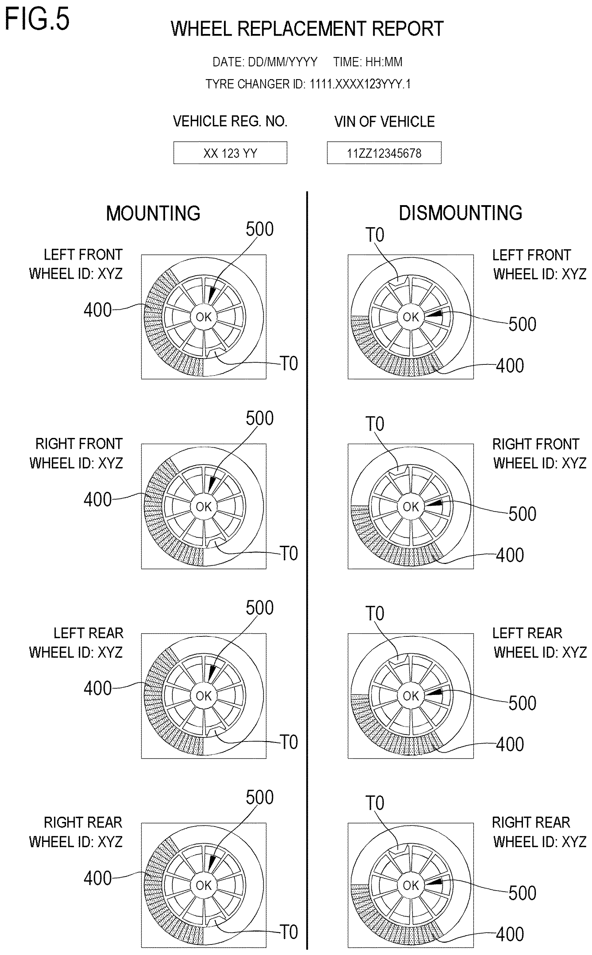

The outcomes of these verifications are made available at the end of the wheel maintenance operation, for example by means of a report document such as that illustrated by way of example in Figure 5, which may, as required, be printed, displayed on a display provided on the tire changer (for example, it may be displayed directly on the display provided on the input/output device 10), and/or displayed remotely (for example, on a video terminal connected to the computer system of the workshop or to a cloud system, on a portable device available to the operator, etc.).

Said report document may comprise information on the particular make and model of tire changer used, including the serial number.

There will also be information relating to the date and time of the mounting/demounting operation, and identification data of the vehicle to which the wheel (or the wheel train) relates, for example the registration number and/or the VIN code.

Preferably, the report document includes information relating to all the wheels of the vehicle subjected to either the demounting or the mounting operation.

It may also include information on the type, characteristics and dimensions of the rim and/or the tire, on the type of TPMS sensor used (where present) and on the state of wear of the wheel components, for example the state of wear of the tire and particularly of the tread, and/or on the level of functionality of the TPMS sensor. If necessary, it may contain suggestions about the need to dispose of excessively worn tires and/or faulty components, or may provide information about the location in the warehouse of tires to be stored in the workshop.

The report document may if necessary also comprise data relating to the name and address of the workshop where the maintenance operation took place, the name and address of the customer, etc.

As a general rule, the report document may, for example, be personalized according to the specific preferences of the workshop carrying out the maintenance, or in terms of its graphics or contents.

Preferably, the report document comprises data for the unique identification of the tire and/or the rim and/or the wheel as a whole. For example, such data may be obtained from an RFID sensor mounted on the tire changer, for reading corresponding RFID tags associated with the tires. In addition or as an alternative to the RFID system, any other identification technology may be used (for example, NFC or optical identification using bar or QR codes, etc.).

When the wheel or the wheel components (tire, TPMS sensor, rim, etc.) have been identified, corresponding information may be retrieved, for example, from data banks contained in memory means accessible to the control unit, possibly from remote data banks, of the cloud type for example, etc.

Such data banks may be of either the public or the private type (created by the manufacturer of the tire changer or by the tire manufacturer, for example), and may be either free or paid for.

Preferably, the tires are identified by RFID technology according to the ISO 20909, ISO 20910, ISO 20911, and ISO 20911 standards, and the tire data are made accessible according to GDSO (Global Data Service Organization) protocols. In the report document illustrated in Figure 5, it can be seen that there are eight different graphic representations, one for each wheel of the vehicle (in the example, the vehicle concerned has four wheels), relating to both the mounting and the demounting operations. In total, therefore, the report document illustrated in Figure 5 contains eight graphic representations of the wheel.

In the case of vehicles having a larger number of wheels (such as heavy goods vehicles), the number of graphic representations will increase accordingly.

In said graphic representations, the wheel is shown, for example, in a top view, divided into circular sectors, preferably in a similar way to its representation on the screen of the input/output device 10 discussed above.

In said representations, the circular sectors may be coloured differently. For example, the presence of a coloured sector may indicate that this sector has been subjected to a particular stress. Different types of colours may also be used for better representation of the different stress intensities to which the different sectors of the tire have been subjected.

In the report document illustrated in Figure 5, the portions, or circular sectors, subjected to high stresses are indicated by 400. In the example of Figure 5, the portions 400 shown are indicative of the stresses encountered throughout the mounting/demounting procedure. However, other types of representation are evidently possible: for example, the representation may relate solely to the portions stressed beyond a predefined stress threshold, etc.

The report document may relate to, and graphically report in terms of the representation 400 of the most stressed sections, only the values relating to the mounting/demounting operations that concern the upper bead of the tire, or only the values concerning the lower bead, or both.

In the latter case, the representation 400 of the most stressed sections could relate solely to the maximum values recorded between the upper and lower beads, or a sum or a mean or any other combination of these values.

The graphic representation of the wheel may also comprise the indication of the position, preferably at the start of the mounting/demounting procedure, of the inflation valve and/or of the TPMS sensor.

In the report document illustrated in Figure 5, the position of the inflation valve and/or of the TPMS sensor at the start of the mounting/demounting procedure is indicated by T0.

If the report document is displayed on a screen, both the graphic representation of the particularly stressed circular sectors and the position of the valve and/or the TPMS sensor may be modified in real time, on the basis of the values observed and/or measured on the tire changer in the course of the operation.

The graphic representation of the inflation valve and/or the TPMS sensor may usefully provide for the use of a particular colouring, green for example, to indicate that, during the mounting/demounting operation, the valve and/or sensor have never been located within or close to portions of the tire stressed beyond the threshold values defined as acceptable.

If this has unfortunately occurred, however, it is possible to provide for the use of a red colouring, or an orange colouring, for example, in the case of borderline or otherwise doubtful situations where further verifications are needed, for the graphic representation of the valve and/or the TPMS sensor.

A further possible method of indicating that the mounting/demounting operation has been successful, in other words that the position of the stressed portions relative to the valve and/or TPMS sensor and the intensity of such stresses fall within the ranges defined as acceptable, may for example be that shown in Figure 5, namely the addition to the report document of an icon 500 of circular shape, coloured in green for example and bearing the wording "OK", positioned in the centre of the graphic representation of the wheel.

On the other hand, if the procedure has been executed incorrectly, said icon 500 could, for example, be coloured in red and not bear the wording "OK".

Evidently, such graphic representations may be amplified at will by adding further explanatory messages of various kinds, in graphic, audio or text form, for the benefit of the operator.

As an alternative or in addition to the report document, the control unit 9 may be set up so that the data relating to the positions of the valve and/or TPMS sensor and stress values of the tire are sent to a remote computer system for storage and/or further processing and/or various uses.

As a general rule, the tire changer 1 of the present invention is capable of documenting the correctness of the execution of the maintenance operation, starting from a knowledge of the initial position (and if necessary the final position) of the TPMS sensor (and of the inflation valve if necessary) and if necessary the state of wear and/or the correct functionality of the wheel and/or its components (rim, valve, TPMS sensor, tire), from the tracing of the change in the angular positions of the valve and/or the TPMS sensor, using the rotation sensor 11, and from a knowledge of the angular position of the tensile stresses applied to the tire by the rim and/or tool, measured using the detector means 12, for example by monitoring the current draw of the electric motor.

If it is found, on completion of the procedure, that the position of the valve and/or the TPMS sensor has never come into contact with areas of the tire subjected to high stress, and that the values of such high stresses have never exceeded the predetermined acceptability threshold, it is reasonable to expect, given the professional practice described above in the wdk procedures and given that the wheel has not completed more than one full revolution, that the maintenance procedure has taken place correctly and that neither the valve nor the TPMS sensor nor the tire have been at risk of damage.

In any case, all the information collected in relation to the performance of the maintenance operations, and the corresponding reporting, when saved in a computer system such as a workshop management system, may be archived for future use and retrieved when necessary.

Such reporting may evidently be supplied to the customer for the purpose of certifying that the maintenance operation has taken place to a professional standard, as a tool for resolving any disputes, or for developing customer loyalty.

The operating procedures of the invention are illustrated briefly below.

### The operation of demounting the tire from the rim

When the wheel 4 has been placed on the self-centring plate 6 and the rim has been gripped with the suitable clamps 60, the operator visually checks the position of the TPMS sensor on the physical wheel, and uses the touchscreen of the input/output device 10 to select the circular sector which, in the graphic representation of the wheel on the screen of the input/output device, approximately corresponds to that in which the inflation valve of the physical wheel is located. In the case of TPMS sensors mounted at the position of the inflation valve, the position of the sensor corresponds to that of the valve. In the case of TPMS "strap" sensors, the position of the TPMS sensor is usually rotated through 180° relative to the position of the valve. In doubtful cases, since the TPMS sensor is not directly visible to the naked eye when the tire is mounted on the rim, before starting the demounting procedure, the operator, in order to be able to see the TPMS sensor directly, must disengage the tire from the wheel in order to detach the beads from the flanges of the rim and be able to verify the position of the TPMS sensor visually.

In any case, when the position of the TPMS sensor has been indicated by means of the input/output device 10, the control unit 9 can correlate the position of the TPMS sensor with the rotational position of the self-centring plate 6.

At this point, the operator will inform the control unit 9 that he intends to perform an operation of demounting the tire from the rim.

Having received this information, the control unit 9 calculates the distance between the circular section on the physical wheel corresponding to that selected by the operator on the input/output device and the position of the mounting/demounting tool.

If this distance is different from a predetermined distance, the control unit 9 commands the electric motor to put the self-centring plate (and therefore the wheel) into rotation, in order to move the TPMS sensor to a distance equivalent to the predetermined, or safety, distance.

At this point, the operator may commence the operation of demounting the tire from the rim, in the usual way and in complete safety.

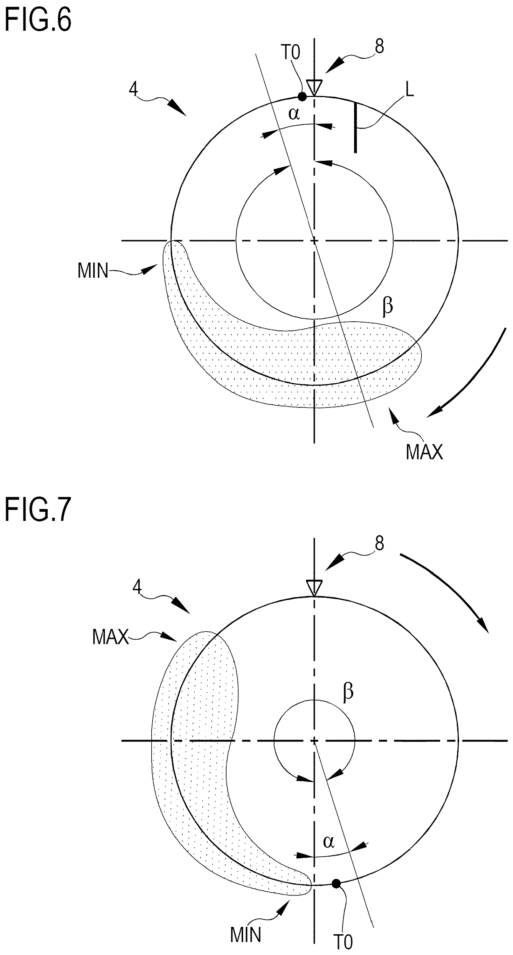

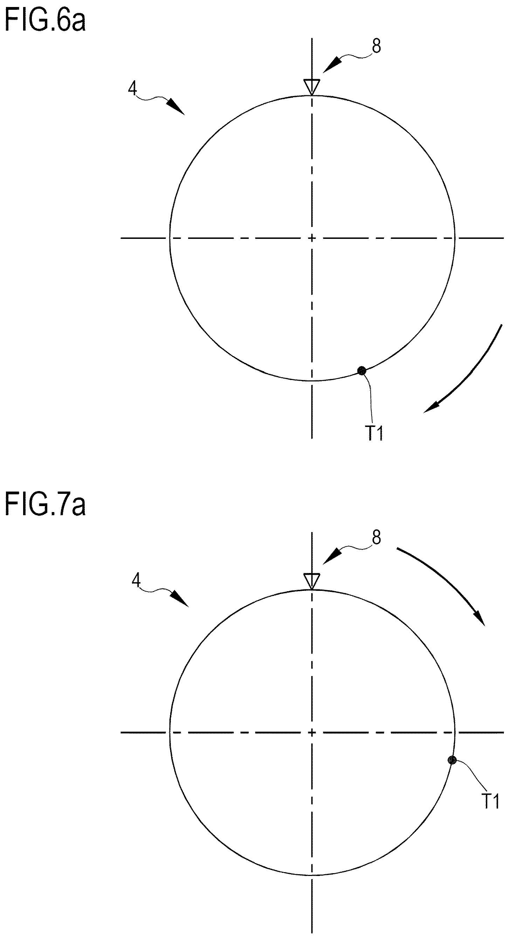

With reference to Figure 6, the direction of rotation of the wheel, indicated by the arrow, is clockwise. With respect to the position of the mounting/demounting tool 8, it is considered that, during the operation of demounting the tire from the rim, the TPMS sensor must initially be positioned, in order to operate safely, inside the arc indicated by the Greek letter α in the figure, that is to say an arc having an amplitude of approximately 15° or less.

In any case, according to the wdk procedures, it is considered that, in the initial position of the demounting procedure, the sensor must be located close to and upstream of the mounting/demounting tool 8, while the lever L (if present) must be located close to and downstream of the tool.

If the tire changer is provided with automatic mounting/demounting tools 8, or if there is no need to use a lever L during the demounting procedure, the initial position of the TPMS sensor may also be downstream of the tool and preferably still close to it, for example within an arc having an amplitude of approximately 15° or less, downstream of the tool.

In any case, the initial position of the TPMS sensor in Figure 6 is indicated by T0. The arc indicated by the Greek letter β, illustrated in Figure 6, is considered to be dangerous, and therefore, in order to avoid damaging the TPMS sensor, it is preferable for the sensor to be outside this arc at the start of the demounting operation.

During the demounting operation, the areas where the contact between the rim and tire develops the greatest stresses are usually located in the arc extending from about 120° to 270° relative to the position of the tool 8. For guidance, during the demounting procedure it is recorded that the intensity of such stresses reaches high values (indicated by MAX in Figure 6) very rapidly between 120° and 180°, and then decreases progressively (the corresponding area of lower values of stress is indicated by MIN in Figure 6).

In any case, if the location of the TPMS sensor is expected to be between eleven o'clock and one o'clock (relative to the midday position of the tool) at the start of the demounting operation, the position of the TPMS sensor is expected to be between four and five o'clock on completion of the demounting. In general, in the course of the demounting operation, and in the absence of any hazardous slippage between the rim and the tire, the wheel (and therefore the TPMS sensor) usually completes about half of a revolution. A possible final position of the TPMS sensor, illustrated in Figure 6a, is indicated by T1. When the final position of the TPMS sensor is approximately that shown schematically in Figure 6a, evidently without the wheel having completed a full revolution, it can usually be affirmed that there has been no significant slippage between the rim and the tire during the procedure, and therefore that the TPMS sensor has never been in any dangerous areas, that is to say the angular sections of the wheel where the stresses exerted by the rim on the tire bead are particularly high.

In such a case, it is impossible for the TPMS sensor to have been damaged by contact with the bead, and it may be verified that the demounting procedure has taken place according to the wdk procedures.

### The operation of mounting the tire on the rim

When the rim 3 has been placed on the self-centring plate 6 and said rim has been gripped with the appropriate clamps 60, the operator visually checks the position of the TPMS sensor on the physical rim, and uses the touchscreen of the input/output device 10 to select the circular sector which, in the graphic representation of the wheel on the screen of the input/output device, approximately corresponds to that in which the TPMS sensor is located on the physical rim.

Thus the control unit 9 can correlate the position of the TPMS sensor with the rotational position of the self-centring plate 6.

At this point, the operator will inform the control unit 9 that he intends to perform an operation of mounting the tire on the rim.

Having received this information, the control unit 9 calculates the distance between the circular section on the physical rim corresponding to that selected by the operator on the input/output device and the position of the mounting/demounting tool.

If this distance is different from a predetermined distance, the control unit 9 commands the electric motor to put the self-centring plate (and therefore the rim) into rotation, in order to move the TPMS sensor.

With reference to Figure 7, the direction of rotation of the wheel, indicated by the arrow, is clockwise. Regarding the position of the mounting/demounting tool 8, it is considered that, during the operation of mounting the tire from the rim, the TPMS sensor must initially be positioned inside the arc indicated by the Greek letter α, that is to say an arc having an amplitude of approximately 15-20° and located opposite the position of the mounting/demounting tool; for guidance (if the position of said tool is taken to be 0°), the arc α should be located between 160° and 180°, preferably between 165° and 180°. In any case, the TPMS sensor should be located, at the start of the mounting operation, between five o'clock and six o'clock relative to the midday position of the tool.

In Figure 7, the initial position of the TPMS sensor is indicated by T0.

If the control unit 9 detects that the angular distance between the TPMS sensor and the mounting/demounting tool is different from the predetermined distance, and the TPMS sensor is therefore located within the arc identified by the Greek letter β, it will put the self-centring plate into rotation to impart a sufficient rotation to the wheel to place the TPMS sensor within the arc α.

At this point, the operator may commence the operation of mounting the tire on the rim, in the usual way and in complete safety.

During the mounting operation, the areas where the tire bead is subjected to the greatest stresses are usually located in the third and fourth quadrants of the wheel. Such stresses usually start at low values (indicated by MIN in Figure 7) and increase progressively and without any abrupt changes to a peak (indicated by MAX in Figure 7), and then fall to zero on completion of the mounting. It is evidently important that the TPMS sensor should not come to be located in such areas during the mounting of the tire.

In any case, if, as stated, the TPMS sensor is expected to be located between five o'clock and six o'clock (relative to the midday position of the tool) at the start of the mounting operation, then the position of the TPMS sensor is expected to be between approximately two and five o'clock on completion of the mounting.

In general, in the course of the mounting operation, and in the absence of any hazardous slippage between the rim and the tire, the wheel (and therefore the TPMS sensor) usually completes about three quarters of a revolution. A possible final position of the TPMS sensor, illustrated in Figure 7a, is indicated by T1.

When this is the case, evidently without the wheel having completed a full revolution, it can usually be affirmed that there has been no significant slippage between the rim and the tire during the procedure, and therefore that the TPMS sensor has never passed through any dangerous areas, that is to say the angular sections of the wheel where the tire bead is subjected to high stresses.

If such a condition is present, it is impossible for the TPMS sensor to have been damaged by contact with the bead, and it may be verified that the mounting procedure has taken place according to the wdk procedures.

### List of references

- 1: Vehicle wheel maintenance apparatus
- 2: Tire
- 3: rim
- V: inflation valve
- T: TPMS sensor
- T0: initial position of TPMS sensor
- T1: final position of TPMS sensor
- 4: wheel
- MAX: area of maximum tension
- MIN: area of minimum tension
- 5: base
- A: main axis of the wheel
- 6: rotary support
- 60: gripping clamps
- 7: column
- 8: mounting/demounting tool
- 9: control unit
- 10: input/output device
- L: lever
- 11: rotation sensor
- 12: detector means
- 13: memory means associated with the control unit
- 14: computer-readable memory means
- 400: portions subject to high stress
- 500: indication of correct execution of the operation

## Claims

1. Method for verifying the execution of a procedure of mounting/demounting a tire on/from a rim of a vehicle wheel, in the context of a process of wheel maintenance, comprising the steps of:
mounting a wheel (4) on a rotary support (6) of a vehicle wheel maintenance apparatus (1), said wheel (4) comprising a respective rim (3), said apparatus (1) comprising an electric motor for putting the rotary support (6) into rotation and at least one tool (8) for demounting a tire (2) from the rim (3) or for mounting the tire (2) on the rim (3);
identifying a position of at least one reference point on the rim;
putting the rotary support (6) into rotation to position the wheel in a position in which the at least one reference point on the rim is located at a predetermined distance from the at least one demounting or mounting tool (8); and then
executing the procedure of demounting the tire (2) from the rim (3) or mounting the tire (2) on the rim (3);
determining at least one position, and at least one respective value, of stress applied by the rim (3) and/or by the demounting or mounting tool (8) to the tire (2);
calculating an angular distance between the position of the at least one reference point on the rim and the at least one position of stress applied by the rim (3) and/or by the demounting or mounting tool (8) to the tire (2), **characterized in that** it comprises the steps of:
verifying that the angular distance between the position of the at least one reference point on the rim and the at least one position of stress applied by the rim (3) and/or by the demounting or mounting tool (8) to the tire (2) lies within a predetermined range of acceptable distances, said range of acceptable distances being stored in memory means (13) accessible by a control unit (9) associated with the vehicle wheel maintenance apparatus (1);
verifying that the at least one respective value of stress applied by the rim (3) and/or by the demounting or mounting tool (8) to the tire (2) lies within a predetermined range of acceptable stress values, said range of acceptable stress values being stored in said memory means (13) accessible by the control unit (9) associated with the vehicle wheel maintenance apparatus (1), and
making the results of the preceding verification steps available.

2. Method according to claim 1, wherein the step of making the results of the preceding verification steps available comprises the steps of:
storing the at least one position of stress applied by the rim (3) and/or by the demounting or mounting tool (8) to the tire (2) in said memory means (13);
storing the at least one respective value of stress applied by the rim (3) and/or by the demounting or mounting tool (8) to the tire (2) in said memory means (13);
creating, in said memory means (13), a report document comprising data relating to the at least one position, and to the at least one respective value, of stress applied by the rim (3) and/or by the demounting or mounting tool (8) to the tire (2),
sharing said report document.

3. Method according to claim 1 or 2, wherein the step of making the results of the preceding verification steps available comprises the step of:
printing the results, using a printer.

4. Method according to claim 1 or 2, wherein the step of making the results of the preceding verification steps available comprises the step of:
displaying the results on a screen.

5. Method according to claim 1 or 2, further comprising the step of:
sending the results of the preceding verification steps to a remote computer system, of the cloud type for example.

6. Method according to claim 1, wherein the step of determining at least one position, and at least one respective value, of stress applied by the rim (3) and/or by the demounting or mounting tool (8) to the tire (2) comprises the step of:
correlating a measurement of the rotational position of the electric motor and/or of the rotary support (6) and/or of the wheel (4) with a measurement of the resistive torque applied to the electric motor and/or with a measurement of the current draw of the electric motor and/or with a measurement of the rotation speed and/or acceleration of the electric motor and/or of the rotary support and/or of the wheel.

7. Method according to claim 6, further comprising the following steps:
determining at least one value of diameter of the wheel (4);
determining at least one value of force applied by the rim (3) and/or by the demounting or mounting tool (8) to the tire (2), on the basis of the at least one value of stress applied by the rim (3) and/or by the demounting or mounting tool (8) to the tire (2), and on the basis of the at least one value of diameter of the wheel (4), and
verifying that the at least one value of force applied by the rim (3) and/or by the demounting or mounting tool (8) to the tire (2) lies within a predetermined range of acceptable force values, said range of acceptable force values being stored in said memory means (13) accessible by the control unit (9) associated with the vehicle wheel maintenance apparatus (1).

8. Method according to any of the preceding claims, wherein the step of executing the procedure of demounting the tire (2) from the rim (3) or mounting the tire (2) on the rim (3) is controlled automatically by the control unit (9) associated with the vehicle wheel maintenance apparatus (1) so as to keep the angular distance between the position of the at least one reference point on the rim and the at least one position, and the at least one respective value, of stress applied by the rim (3) and/or by the demounting or mounting tool (8) to the tire (2) within respective predetermined ranges of acceptable distances and acceptable values of stress.

9. Vehicle wheel maintenance apparatus (1), comprising:
a base (5);
a rotary support (6) mounted on the base (5) and capable of receiving and supporting a rim (3) of a wheel (4) of a vehicle, said rim (3) having at least one reference point;
an electric motor, associated with the base, for putting the rotary support (6) into rotation;
at least one tool (8) for demounting a tire (2) from the rim (3) or for mounting the tire (2) on the rim (3);
a control unit (9) capable of actuating the electric motor for positioning the wheel (4) in a position in which the at least one reference point on the rim is located at a predetermined distance from the at least one demounting or mounting tool (8), said control unit (9) having access to memory means (13); a rotation sensor (11), operationally connected to the control unit (9), for measuring the position and/or rotation speed and/or acceleration of the electric motor and/or of the rotary support and/or of the wheel;
detector means (12), operationally connected to the control unit (9), for measuring a resistive torque applied to the electric motor and/or a current draw of the electric motor;
the control unit (9) being capable of identifying at least one position, and at least one respective value, of stress applied by the rim (3) and/or by the demounting or mounting tool (8) to the tire (2), and of calculating an angular distance between the position of the at least one reference point on the rim and the at least one position of stress applied by the rim (3) and/or by the demounting or mounting tool (8) to the tire (2),
**characterized in that**
the control unit (9) is capable of verifying that the angular distance between the position of the at least one reference point on the rim and the at least one position of stress applied by the rim (3) and/or by the demounting or mounting tool (8) to the tire (2) lies within a predetermined range of acceptable distances stored in said memory means (13), and that the at least one respective value of stress applied by the rim (3) and/or by the demounting or mounting tool (8) to the tire (2) lies within a predetermined range of acceptable stress values stored in said memory means (13), and **in that**
the control unit (9) is capable of making the results of said verifications available.

10. Apparatus according to claim 9, wherein the control unit (9) is capable of storing the at least one position, and the at least one respective value, of stress applied by the rim (3) and/or by the demounting or mounting tool (8) to the tire (2) in said memory means (13); the control unit (9) also being capable of creating, in said memory means (13), a report document comprising at least data relating to the at least one position, and to the at least one respective value, of stress applied by the rim (3) and/or by the demounting or mounting tool (8) to the tire (2), and of sharing said report document.

11. Apparatus according to claim 9 or 10, wherein the at least one reference point on the rim comprises an inflation valve or a TPMS sensor or a spoke.

12. Apparatus according to claim 9 or 10, wherein the memory means (13) accessible by the control unit (9) are at least partially located in a remote computer system, of the cloud type for example.

13. Apparatus according to claim 9 or 10, wherein the memory means (13) accessible by the control unit (9) are at least partially located in a portable device, for example a tablet or a smartphone.

14. Apparatus according to any of the preceding claims 9 to 13, wherein the control unit (9) is capable of controlling the vehicle wheel maintenance apparatus (1) automatically, so as to keep the angular distance between the position of the at least one reference point on the rim and the at least one position, and the at least one respective value, of stress applied by the rim (3) and/or by the demounting or mounting tool (8) to the tire (2) within respective predetermined ranges of acceptable distances and acceptable values of stress stored in said memory means (13).

15. Apparatus according to any of claims 9 to 14, comprising
an input/output device (10) capable of graphically displaying the wheel (4) with the wheel divided into a plurality of parts, the input/output device (10) being operable by an operator for the purpose of selecting a part, from among the plurality of parts into which the wheel is divided, to be associated with the position of the at least one reference point on the rim;
the control unit (9) being capable of calculating the predetermined distance of the at least one reference point on the rim from the at least one demounting or mounting tool (8), as the distance of the at least one demounting or mounting tool (8) from a point belonging to the part associated with the position of the at least one reference point on the rim.

## Patentansprüche

1. Verfahren zur Überprüfung der Ausführung einer Prozedur zum Montieren/Demontieren eines Reifens auf/von einer Felge eines Fahrzeugrades im Rahmen eines Radwartungsprozesses, umfassend die Schritte:
Montieren eines Rades (4) auf einer drehbaren Halterung (6) einer Fahrzeugrad-Wartungsvorrichtung (1), wobei das Rad (4) eine entsprechende Felge (3) umfasst, wobei die Vorrichtung (1) einen Elektromotor zum Drehen der drehbaren Halterung (6) und wenigstens ein Werkzeug (8) zum Demontieren eines Reifens (2) von der Felge (3) oder zum Montieren des Reifens (2) auf der Felge (3) umfasst;
Identifizieren einer Position von wenigstens einem Bezugspunkt auf der Felge;
Drehen der drehbaren Halterung (6), um das Rad in eine Position zu bringen, in der sich der wenigstens eine Bezugspunkt auf der Felge in einem vorbestimmten Abstand von dem wenigstens einen Demontage- oder Montagewerkzeug (8) befindet; und danach
Ausführen der Prozedur zum Demontieren des Reifens (2) von der Felge (3) oder zum Montieren des Reifens (2) auf die Felge (3);
Bestimmen wenigstens einer Position und wenigstens eines entsprechenden Wertes der durch die Felge (3) und/oder durch das Demontage- oder Montagewerkzeug (8) auf den Reifen (2) ausgeübten Beanspruchung;
Berechnen eines Winkelabstands zwischen der Position des wenigstens einen Bezugspunkts auf der Felge und der wenigstens einen Position der durch die Felge (3) und/oder das Demontage- oder Montagewerkzeug (8) auf den Reifen (2) ausgeübten Beanspruchung,
**dadurch gekennzeichnet, dass** es die Schritte umfasst:
Überprüfen, dass der Winkelabstand zwischen der Position des wenigstens einen Bezugspunkts auf der Felge und der wenigstens einen Position der durch die Felge (3) und/oder durch das Demontage- oder Montagewerkzeug (8) auf den Reifen (2) ausgeübten Beanspruchung innerhalb eines vorbestimmten Bereichs akzeptabler Abstände liegt, wobei der Bereich akzeptabler Abstände in Speichermitteln (13) gespeichert ist, auf die eine der Fahrzeugrad-Wartungsvorrichtung (1) zugeordnete Steuereinheit (9) Zugriff hat;
Überprüfen, dass der wenigstens eine jeweilige Wert der durch die Felge (3) und/oder durch das Demontage- oder Montagewerkzeug (8) auf den Reifen (2) ausgeübten Beanspruchung innerhalb eines vorbestimmten Bereichs akzeptabler Beanspruchungswerte liegt, wobei der Bereich akzeptabler Beanspruchungswerte in den Speichermitteln (13) gespeichert ist, auf die die der Fahrzeugrad-Wartungsvorrichtung (1) zugeordnete Steuereinheit (9) Zugriff hat, und
Bereitstellen der Ergebnisse der vorangehenden Überprüfungsschritte.

2. Verfahren nach Anspruch 1, wobei der Schritt des Bereitstellens der Ergebnisse der vorangehenden Überprüfungsschritte die Schritte umfasst:
Speichern der wenigstens einen Position der durch die Felge (3) und/oder durch das Demontage- oder Montagewerkzeug (8) auf den Reifen (2) ausgeübten Beanspruchung in den Speichermitteln (13);
Speichern des wenigstens einen jeweiligen Wertes der durch die Felge (3) und/oder durch das Demontage- oder Montagewerkzeug (8) auf den Reifen (2) ausgeübten Beanspruchung in den Speichermitteln (13);
Erzeugen eines Berichtsdokuments in den Speichermitteln (13), das Daten umfasst, die sich auf die wenigstens eine Position und auf den wenigstens einen jeweiligen Wert der durch die Felge (3) und/oder durch das Demontage- oder Montagewerkzeug (8) auf den Reifen (2) ausgeübten Beanspruchung beziehen,
Weitergeben des Berichtsdokuments.

3. Verfahren nach Anspruch 1 oder 2, wobei der Schritt des Bereitstellens der Ergebnisse der vorangehenden Überprüfungsschritte den Schritt umfasst:
Ausdrucken der Ergebnisse unter Verwendung eines Druckers.

4. Verfahren nach Anspruch 1 oder 2, wobei der Schritt des Bereitstellens der Ergebnisse der vorangehenden Überprüfungsschritte den Schritt umfasst:
Anzeigen der Ergebnisse auf einem Bildschirm.

5. Verfahren nach Anspruch 1 oder 2, ferner den Schritt umfassend:
Senden der Ergebnisse der vorangehenden Überprüfungsschritte an ein Remote-Computersystem, beispielsweise in Form einer Cloud.

6. Verfahren nach Anspruch 1, wobei der Schritt des Bestimmens wenigstens einer Position und wenigstens eines jeweiligen Wertes der durch die Felge (3) und/oder durch das Demontage- oder Montagewerkzeug (8) auf den Reifen (2) ausgeübten Beanspruchung den Schritt umfasst:
Korrelieren einer Messung der Drehposition des Elektromotors und/oder der drehbaren Halterung (6) und/oder des Rades (4) mit einer Messung des auf den Elektromotor ausgeübten Widerstandsmoments und/oder mit einer Messung der Stromaufnahme des Elektromotors und/oder mit einer Messung der Drehgeschwindigkeit und/oder Beschleunigung des Elektromotors und/oder der drehbaren Halterung und/oder des Rades.

7. Verfahren nach Anspruch 6, ferner die folgenden Schritte umfassend:
Bestimmen wenigstens eines Wertes des Durchmessers des Rades (4);
Bestimmen wenigstens eines Wertes der Kraft, die durch die Felge (3) und/oder durch das Demontage- oder Montagewerkzeug (8) auf den Reifen (2) ausgeübt wird, auf der Grundlage des wenigstens einen Wertes der durch die Felge (3) und/oder durch das Demontage- oder Montagewerkzeug (8) auf den Reifen (2) ausgeübten Beanspruchung und auf der Grundlage des wenigstens einen Wertes des Durchmessers des Rades (4), und
Überprüfen, dass der wenigstens eine Wert der Kraft, die durch die Felge (3) und/oder durch das Demontage- oder Montagewerkzeug (8) auf den Reifen (2) ausgeübt wird, innerhalb eines vorbestimmten Bereichs akzeptabler Kraftwerte liegt, wobei der Bereich akzeptabler Kraftwerte in den Speichermitteln (13) gespeichert ist, auf die die der Fahrzeugrad-Wartungsvorrichtung (1) zugeordnete Steuereinheit (9) Zugriff hat.

8. Verfahren nach einem der vorangehenden Ansprüche, wobei der Schritt des Ausführens der Prozedur des Demontierens des Reifens (2) von der Felge (3) oder des Montierens des Reifens (2) auf die Felge (3) automatisch von der der Fahrzeugrad-Wartungsvorrichtung (1) zugeordneten Steuereinheit (9) so gesteuert wird, dass der Winkelabstand zwischen der Position des wenigstens einen Bezugspunkts auf der Felge und der wenigstens einen Position gehalten wird, und der wenigstens eine jeweilige Wert der durch die Felge (3) und/oder dem Demontage- oder Montagewerkzeug (8) auf den Reifen (2) ausgeübten Beanspruchung innerhalb jeweiliger vorbestimmter Bereiche akzeptabler Abstände und akzeptabler Beanspruchungswerte gehalten werden.

9. Fahrzeugrad-Wartungsvorrichtung (1), umfassend:
eine Basis (5);
eine drehbare Halterung (6), die auf der Basis (5) montiert ist und fähig ist, eine Felge (3) eines Rades (4) eines Fahrzeugs aufzunehmen und zu tragen, wobei die Felge (3) wenigstens einen Bezugspunkt aufweist;
einen Elektromotor, der der Basis zugeordnet ist, um die drehbare Halterung (6) in Drehung zu versetzen;
wenigstens ein Werkzeug (8) zum Demontieren eines Reifens (2) von der Felge (3) oder zum Montieren des Reifens (2) auf der Felge (3);
eine Steuereinheit (9), die fähig ist, den Elektromotor zu betätigen, um das Rad (4) in einer Position zu positionieren, in der sich der wenigstens eine Bezugspunkt auf der Felge in einem vorbestimmten Abstand von dem wenigstens einen Demontage- oder Montagewerkzeug (8) befindet, wobei die Steuereinheit (9) Zugriff auf Speichermittel (13) hat;
einen Drehsensor (11), der operativ mit der Steuereinheit (9) verbunden ist, um die Position und/oder die Drehgeschwindigkeit und/oder die Beschleunigung des Elektromotors und/oder der drehbaren Halterung und/oder des Rades zu messen;
Detektormittel (12), die operativ mit der Steuereinheit (9) verbunden sind, um ein auf den Elektromotor ausgeübtes Widerstandsmoment und/oder eine Stromaufnahme des Elektromotors zu messen;
wobei die Steuereinheit (9) fähig ist, wenigstens eine Position und wenigstens einen entsprechenden Wert der durch die Felge (3) und/oder durch das Demontage- oder Montagewerkzeug (8) auf den Reifen (2) ausgeübten Beanspruchung zu identifizieren und einen Winkelabstand zwischen der Position des wenigstens einen Bezugspunkts auf der Felge und der wenigstens einen Position der durch die Felge (3) und/oder durch das Demontage- oder Montagewerkzeug (8) auf den Reifen (2) ausgeübten Beanspruchung zu berechnen,
**dadurch gekennzeichnet, dass**
die Steuereinheit (9) fähig ist zu überprüfen, dass der Winkelabstand zwischen der Position des wenigstens einen Bezugspunkts auf der Felge und der wenigstens einen Position der durch die Felge (3) und/oder durch das Demontage- oder Montagewerkzeug (8) auf den Reifen (2) ausgeübten Beanspruchung innerhalb eines vorbestimmten Bereichs akzeptabler Abstände liegt, der in den Speichermitteln (13) gespeichert ist, und dass der wenigstens eine jeweilige Wert der durch die Felge (3) und/oder durch das Demontage- oder Montagewerkzeug (8) auf den Reifen (2) ausgeübten Beanspruchung innerhalb eines vorbestimmten Bereichs akzeptabler Beanspruchungswerte liegt, die in den Speichermitteln (13) gespeichert sind, und dadurch, dass
die Steuereinheit (9) fähig ist, die Ergebnisse der Überprüfungen bereitzustellen.

10. Vorrichtung nach Anspruch 9, wobei die Steuereinheit (9) fähig ist, die wenigstens eine Position und den wenigstens einen jeweiligen Wert der durch die Felge (3) und/oder durch das Demontage- oder Montagewerkzeug (8) auf den Reifen (2) ausgeübten Beanspruchung in den Speichermitteln (13) zu speichern; die Steuereinheit (9) auch fähig ist, in den Speichermitteln (13) ein Berichtsdokument zu erzeugen, das wenigstens Daten umfasst, die sich auf die wenigstens eine Position und auf den wenigstens einen jeweiligen Wert der durch die Felge (3) und/oder durch das Demontage- oder Montagewerkzeug (8) auf den Reifen (2) ausgeübten Beanspruchung beziehen, und das Berichtsdokument weiterzugeben.

11. Vorrichtung nach Anspruch 9 oder 10, wobei der wenigstens eine Bezugspunkt auf der Felge ein Aufpumpventil oder einen TPMS-Sensor oder eine Speiche umfasst.

12. Vorrichtung nach Anspruch 9 oder 10, wobei sich die Speichermittel (13), auf die die Steuereinheit (9) Zugriff hat, wenigstens teilweise in einem Remote-Computersystem, beispielsweise in einer Cloud, befinden.

13. Vorrichtung nach Anspruch 9 oder 10, wobei sich die Speichermittel (13), auf die die Steuereinrichtung (9) Zugriff hat, wenigstens teilweise in einer tragbaren Vorrichtung, beispielsweise einem Tablet oder einem Smartphone, befinden.

14. Vorrichtung nach einem der vorangehenden Ansprüche 9 bis 13, wobei die Steuereinheit (9) fähig ist, die Fahrzeugrad-Wartungsvorrichtung (1) automatisch so zu steuern, dass der Winkelabstand zwischen der Position des wenigstens einen Bezugspunkts auf der Felge und der wenigstens einen Position und des wenigstens einen jeweiligen Werts der durch die Felge (3) und/oder durch das Demontage- oder Montagewerkzeug (8) auf den Reifen (2) ausgeübten Beanspruchung innerhalb jeweiliger vorbestimmter Bereiche akzeptabler Abstände und akzeptabler Beanspruchungswerte gehalten werden, die in den Speichermitteln (13) gespeichert sind.

15. Vorrichtung nach einem der Ansprüche 9 bis 14, umfassend:
eine Eingabe-/Ausgabevorrichtung (10), die fähig ist, das Rad (4), welches in mehrere Teile unterteilt ist, grafisch anzuzeigen, wobei die Eingabe-/Ausgabevorrichtung (10) von einem Bediener bedient werden kann, um aus den mehreren Teilen, in die das Rad unterteilt ist, einen Teil auszuwählen, der der Position des wenigstens einen Bezugspunkts auf der Felge zugeordnet werden soll;
wobei die Steuereinheit (9) fähig ist, den vorbestimmten Abstand des wenigstens einen Bezugspunkts auf der Felge von dem wenigstens einen Demontage- oder Montagewerkzeug (8) als den Abstand des wenigstens einen Demontage- oder Montagewerkzeugs (8) von einem Punkt zu berechnen, der zu dem Teil gehört, der der Position des wenigstens einen Bezugspunkts auf der Felge zugeordnet ist.

## Revendications

1. Procédé de vérification de l'exécution d'une procédure de montage/démontage d'un pneu sur/d'une jante d'une roue de véhicule, dans le cadre d'un processus de maintenance de roue, comprenant les étapes de :
montage d'une roue (4) sur un support rotatif (6) d'un appareil (1) de maintenance de roue de véhicule, ladite roue (4) comprenant une jante (3) respective, ledit appareil (1) comprenant un moteur électrique pour la mise en rotation du support rotatif (6) et au moins un outil (8) pour le démontage d'un pneu (2) de la jante (3) ou le montage du pneu (2) sur la jante (3) ;
identification d'une position d'au moins un point de référence sur la jante ;
mise en rotation du support rotatif (6) pour le positionnement de la roue dans une position dans laquelle ledit au moins un point de référence sur la jante est situé à une distance prédéterminée dudit au moins un outil (8) de démontage ou de montage ; puis
exécution de la procédure de démontage du pneu (2) de la jante (3) ou de montage du pneu (2) sur la jante (3) ;
détermination d'au moins une position, et d'au moins une valeur respective, de contrainte appliquée par la jante (3) et/ou par l'outil (8) de démontage ou de montage au pneu (2) ;
calcul d'une distance angulaire entre la position dudit au moins un point de référence sur la jante et ladite au moins une position de contrainte appliquée par la jante (3) et/ou par l'outil (8) de démontage ou de montage au pneu (2), **caractérisé en ce qu'**il comprend les étapes de :
vérification du fait que la distance angulaire entre la position dudit au moins un point de référence sur la jante et ladite au moins une position de contrainte appliquée par la jante (3) et/ou par l'outil (8) de démontage ou de montage au pneu (2) se situe dans une plage prédéterminée de distances acceptables, ladite plage de distances acceptables étant enregistrée dans des moyens de mémoire (13) accessibles par une unité de commande (9) associée à l'appareil (1) de maintenance de roue de véhicule ;
vérification du fait que ladite au moins une valeur respective de contrainte appliquée par la jante (3) et/ou par l'outil (8) de démontage ou de montage au pneu (2) se situe dans une plage prédéterminée de valeurs de contrainte acceptables, ladite plage de valeurs de contrainte acceptables étant enregistrée dans lesdits moyens de mémoire (13) accessibles par l'unité de commande (9) associée à l'appareil (1) de maintenance de roue de véhicule et
mise à disposition des résultats des étapes précédentes de vérification.

2. Procédé selon la revendication 1, l'étape de mise à disposition des résultats des étapes précédentes de vérification comprenant les étapes de :
enregistrement de ladite au moins une position de contrainte appliquée par la jante (3) et/ou par l'outil (8) de démontage ou de montage au pneu (2) dans lesdits moyens de mémoire (13) ;
enregistrement de ladite au moins une valeur respective de contrainte appliquée par la jante (3) et/ou par l'outil (8) de démontage ou de montage au pneu (2) dans lesdits moyens de mémoire (13) ;
création, dans lesdits moyens de mémoire (13), d'un document de rapport comprenant des données relatives à ladite au moins une position, et à ladite au moins une valeur respective, de contrainte appliquée par la jante (3) et/ou par l'outil (8) de démontage ou de montage au pneu (2),
partage dudit document de rapport.

3. Procédé selon la revendication 1 ou 2, l'étape de mise à disposition des résultats des étapes précédentes de vérification comprenant l'étape de :
impression des résultats à l'aide d'une imprimante.

4. Procédé selon la revendication 1 ou 2, l'étape de mise à disposition des résultats des étapes précédentes de vérification comprenant l'étape de :
affichage des résultats sur un écran.

5. Procédé selon la revendication 1 ou 2, comprenant en outre l'étape de :
envoi des résultats des étapes précédentes de vérification à un système informatique distant, par exemple de type Cloud.

6. Procédé selon la revendication 1, l'étape de détermination d'au moins une position, et d'au moins une valeur respective, de contrainte appliquée par la jante (3) et/ou par l'outil (8) de démontage ou de montage au pneu (2) comprenant l'étape de :
corrélation d'une mesure de la position de rotation du moteur électrique et/ou du support rotatif (6) et/ou de la roue (4) avec une mesure du couple résistif appliqué au moteur électrique et/ou avec une mesure de la consommation de courant du moteur électrique et/ou avec une mesure de la vitesse de rotation et/ou de l'accélération du moteur électrique et/ou du support rotatif et/ou de la roue.

7. Procédé selon la revendication 6, comprenant en outre les étapes suivantes :
détermination d'au moins une valeur de diamètre de la roue (4) ;
détermination d'au moins une valeur de force appliquée par la jante (3) et/ou par l'outil (8) de démontage ou de montage au pneu (2), sur la base de ladite au moins une valeur de contrainte appliquée par la jante (3) et/ou par l'outil (8) de démontage ou de montage au pneu (2) et sur la base de ladite au moins une valeur de diamètre de la roue (4) et
vérification du fait que ladite au moins une valeur de force appliquée par la jante (3) et/ou par l'outil (8) de démontage ou de montage au pneu (2) se situe dans une plage prédéterminée de valeurs de force acceptables, ladite plage de valeurs de force acceptables étant enregistrée dans lesdits moyens de mémoire (13) accessibles par l'unité de commande (9) associée à l'appareil (1) de maintenance de roue de véhicule.

8. Procédé selon l'une quelconque des revendications précédentes, l'étape d'exécution de la procédure de démontage du pneu (2) de la jante (3) ou de montage du pneu (2) sur la jante (3) étant contrôlée automatiquement par l'unité de commande (9) associée à l'appareil (1) de maintenance de roue de véhicule afin de maintenir la distance angulaire entre la position dudit au moins un point de référence sur la jante et ladite au moins une position, et ladite au moins une valeur respective, de contrainte appliquée par la jante (3) et/ou par l'outil (8) de démontage ou de montage au pneu (2) dans des plages prédéterminées respectives de distances acceptables et de valeurs de contrainte acceptables.

9. Appareil (1) de maintenance de roue de véhicule, comprenant :
une base (5) ;
un support rotatif (6) monté sur la base (5) et apte à recevoir et à supporter une jante (3) d'une roue (4) d'un véhicule, ladite jante (3) présentant au moins un point de référence ;
un moteur électrique, associé à la base, pour la mise en rotation du support rotatif (6) ;
au moins un outil (8) pour le démontage d'un pneu (2) de la jante (3) ou le montage du pneu (2) sur la jante (3) ;
une unité de commande (9) apte à actionner le moteur électrique pour le positionnement de la roue (4) dans une position dans laquelle ledit au moins un point de référence sur la jante est situé à une distance prédéterminée dudit au moins un outil (8) de démontage ou de montage,
ladite unité de commande (9) ayant accès à des moyens de mémoire (13) ;
un capteur de rotation (11), relié de manière fonctionnelle à l'unité de commande (9), pour la mesure de la position et/ou de la vitesse de rotation et/ou de l'accélération du moteur électrique et/ou du support rotatif et/ou de la roue ;
des moyens de détection (12), reliés de manière fonctionnelle à l'unité de commande (9), pour la mesure d'un couple résistif appliqué au moteur électrique et/ou d'une consommation de courant du moteur électrique ;
l'unité de commande (9) étant apte à identifier au moins une position, et au moins une valeur respective, de contrainte appliquée par lajante (3) et/ou par l'outil (8) de démontage ou de montage au pneu (2) et à calculer une distance angulaire entre la position dudit au moins un point de référence sur la jante et ladite au moins une position de contrainte appliquée par la jante (3) et/ou par l'outil (8) de démontage ou de montage au pneu (2),
**caractérisé en ce que**
l'unité de commande (9) est apte à vérifier que la distance angulaire entre la position dudit au moins un point de référence sur la jante et ladite au moins une position de contrainte appliquée par la jante (3) et/ou par l'outil (8) de démontage ou de montage au pneu (2) se situe dans une plage prédéterminée de distances acceptables enregistrées dans lesdits moyens de mémoire (13) et que ladite au moins une valeur respective de contrainte appliquée par la jante (3) et/ou par l'outil (8) de démontage ou de montage au pneu (2) se situe dans une plage prédéterminée de valeurs de contrainte acceptables enregistrées dans lesdits moyens de mémoire (13) et **en ce que**
l'unité de commande (9) est apte à rendre disponibles les résultats desdites vérifications.

10. Appareil selon la revendication 9, l'unité de commande (9) étant apte à enregistrer ladite au moins une position, et ladite au moins une valeur respective, de contrainte appliquée par la jante (3) et/ou par l'outil (8) de démontage ou de montage au pneu (2) dans lesdits moyens de mémoire (13) ; l'unité de commande (9) étant également apte à créer, dans lesdits moyens de mémoire (13), un document de rapport comprenant au moins des données relatives à ladite au moins une position, et à ladite au moins une valeur respective, de contrainte appliquée par la jante (3) et/ou par l'outil (8) de démontage ou de montage au pneu (2) et à partager ledit document de rapport.

11. Appareil selon la revendication 9 ou 10, ledit au moins un point de référence sur la jante comprenant une valve de gonflage ou un capteur SSPP ou un rayon.

12. Appareil selon la revendication 9 ou 10, les moyens de mémoire (13) accessibles par l'unité de commande (9) étant au moins partiellement situés dans un système informatique distant, par exemple de type Cloud.

13. Appareil selon la revendication 9 ou 10, les moyens de mémoire (13) accessibles par l'unité de commande (9) étant au moins partiellement situés dans un dispositif portable, par exemple une tablette ou un smartphone.

14. Appareil selon l'une quelconque des revendications précédentes 9 à 13, l'unité de commande (9) étant apte à contrôler automatiquement l'appareil (1) de maintenance de roue de véhicule, afin de maintenir la distance angulaire entre la position dudit au moins un point de référence sur la jante et ladite au moins une position, et ladite au moins une valeur respective, de contrainte appliquée par la jante (3) et/ou par l'outil (8) de démontage ou de montage au pneu (2) dans des plages prédéterminées respectives de distances acceptables et de valeurs acceptables de contrainte enregistrées dans lesdits moyens de mémoire (13).

15. Appareil selon l'une quelconque des revendications 9 à 14, comprenant
un dispositif d'entrée/sortie (10) apte à afficher graphiquement la roue (4), la roue étant divisée en une pluralité de segments, le dispositif d'entrée/sortie (10) étant actionnable par un opérateur dans le but de sélectionner un segment, parmi la pluralité de segments dans lesquels la roue est divisée, à associer à la position dudit au moins un point de référence sur la jante ;
l'unité de commande (9) étant apte à calculer la distance prédéterminée dudit au moins un point de référence sur la jante dudit au moins un outil (8) de démontage ou de montage, comme étant la distance dudit au moins un outil (8) de démontage ou de montage d'un point appartenant au segment associé à la position dudit au moins un point de référence sur la jante.
